# EUROPEAN PATENT APPLICATION

(11) **EP 1 484 907 A2**
(43) Date of publication of application: **08.12.2004**
(21) Application number: 03029779.0
(22) Date of filing: 23.12.2003
(51) Int. Cl.: H04N 1/62

(54) **Color correction in images**

(30) Priority: 02.06.2003 US 453028
(71) Applicant: Hewlett-Packard Development Company, L.P., Houston, Texas 77070 (US)
(72) Inventor: Gondek, Jay S., Camas, Washington 98607 (US); Berge, Tom, Camas, Washington 98607 (US)
(74) Representative: Schoppe, Fritz, Dipl.-Ing.

(57) **Abstract**

A method (100) of correcting color in an image (48) is provided. The method (100) includes identifying (102) a color in the image (48) as being within a set of selected colors (56), matching (104) the identified color (58) with a corresponding true color (66), and producing a substitute image (68) with the corresponding true color (66) in place of the identified color (58).

## Description

### BACKGROUND

Digital photography has become popular in the past few years. Various devices may be used to produce a photographic print from an image captured using digital photography. The quality of the photographic print may be based on several factors, including, but not limited to, color accuracy, crispness, clarity, etc. Viewers may be more or less sensitive to various qualities when viewing the photographic print.

For example, many viewers are acutely aware of the oolor accuracy in a photographic print. Specifically, viewers may be sensitive to the accuracy of skin tones and colors as reproduced in the photographic print. Slight inaccuracies in the color of the skin of a human thus may be easily discernible. Likewise, slight inaccuracies in the color of other real-world items, such as the sky, grass, etc., may be easily apparent to viewers in some photographic prints.

### SUMMARY

A method of correcting color in an image is provided. The method includes identifying a color in the image as being within a set of selected colors, matching the identified color with a corresponding true color, and producing a substitute image with the corresponding true color in place of the identified color.

### BRIEF DESCRIPTION OF THE DRAWINGS

Fig. 1 is a somewhat schematic illustration of a system for correcting color in a captured image according to an embodiment of the present invention.
Fig. 2 is a simplified block diagram of an image-rendering device including a color correction program for use in communication with captured color and a true color databases to adjust one or more colors in a captured image according to an embodiment of the present invention.
Fig. 3 is a schematic illustration of the correction of colors in a captured image by matching an identified color with a true color such that an image may be produced with the true color in place of the identified color according to an embodiment of the present invention.
Fig. 4 is a flow diagram of a method for correcting a color in a captured image according to an embodiment of the present invention.

### DETAILED DESCRIPTION

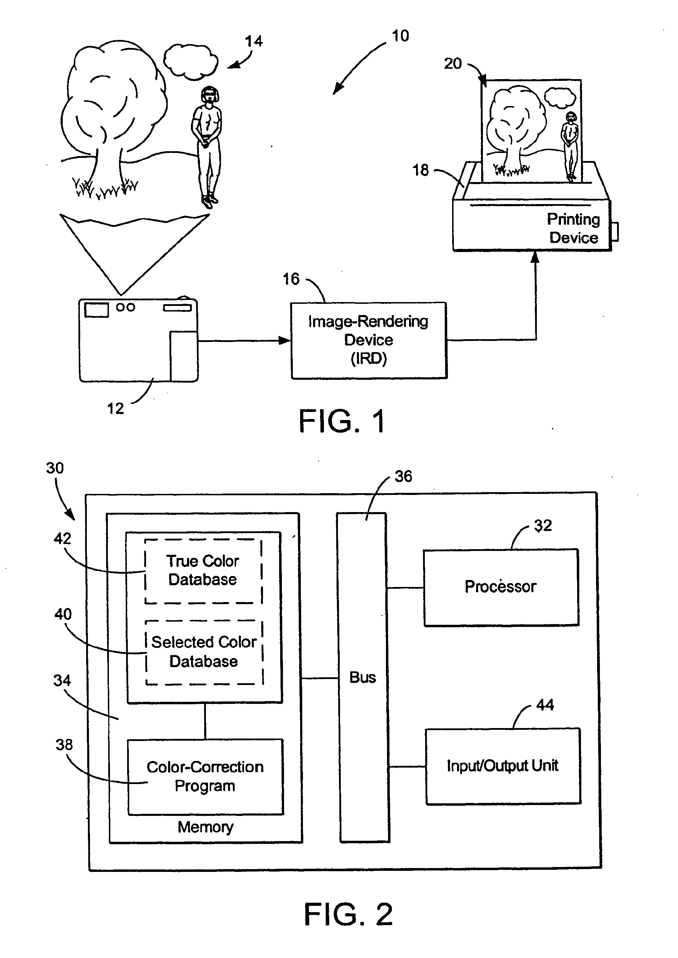

Referring initially to Fig. 1, a system for correcting color in a captured image is shown generally at 10. As indicated, system 10 may include an electronic image-capture device, such as a digital camera 12, which may be adapted to capture an electronic image of a scene 14. As used herein, scene 14 typically refers to a real-life object, person, landscape, etc. Captured image, as used herein, may include any type of electronic reproduction of an image, but typically refers to an image that may be produced to a viewer, as by printing or otherwise presenting to the viewer in a perceivable way.

Accordingly, in addition to the indicated image-capture device, system 10 will be seen to include a presentation device, such as printing device 18. The presentation device may be any suitable device for producing a perceivable reproduction of the image, but is referred to herein as a printing device such as a desktop printer, inkjet printer, laser printer, copier, fax machine, etc. As indicated in Fig. 1, the presentation device may be configured to produce an output 20, which includes a reproduction of scene 14 based at least in part on the image captured by the image-capture device.

Referring still to Fig. 1, it will be noted that the referenced system includes an image-rendering device (IRD) 16, which may be employed to adjust one or more selected colors in a captured image. In particular, the image-rendering device may be configured to identify a color in the captured image as being within a set of selected colors, match the identified color with a corresponding true color, and produce a substitute image with the corresponding true color in place of the identified color. The image-rendering device may be a stand-alone device, as shown, or may be resident on another device configured to receive the captured image for processing. For example, the image-rendering device may be resident on image-capture device 12, on a computing device, or on printing device 18.

Image-rendering device 16 may enable correction of potential inaccuracies in the appearance of an item in a captured image. Initially, presence of an item in need of such correction may be determined based on the presence of a selected color in the captured image. Such color may be selected to correspond to the color of an item as typically captured by an image-capture device. The selected color thus may be slightly off-color relative to a viewer's perception of the color of the actual item. Correspondingly, the item may be more accurately represented by an image that includes a true color (e.g., a color that more closely corresponds with a viewer's perception of the color of the actual item). The image-rendering device thus may be configured to match the selected color with a true color, and to produce a substitute image that includes the true color in place of the selected color. This image may then be communicated to a presentation device and presented to the viewer for a more realistic color effect.

It will be appreciated that such image-rendering device more typically may be configured to determine presence of an item to be corrected by identifying a color in a set of selected colors associated with such item. The set of selected colors, it will be appreciated, may correspond to a set of captured colors expected to represent the item in a captured image. Typically, this set of captured colors will exceed a set of real colors that a viewer expects to perceive when actually viewing the actual item. The image-rendering device thus may be configured to map the larger set of captured colors associated with the item onto the smaller set of real colors associated with the item. Each captured color within the set of selected colors thus may be matched with a corresponding true color, and a substitute image may be produced that includes true colors in place of the captured colors that were within the set of selected colors. It is noted that the captured colors and true colors need not be mutually exclusive.

As indicated above, inaccuracies in the color of some items may be more apparent to the viewer than inaccuracies in the color of other items. It will be appreciated, for example, that even slight variations in skin color may be noticeable to a viewer of a photographic print. Accordingly, the present image-rendering device is hereinafter described in the context of correcting inaccurate skin color in a captured digital image so as to provide for a more color-realistic photographic print. The image-rendering device thus may be configured to identify skin colors within a captured image based on a determined set of likely captured colors corresponding to skin, and may adjust such captured colors to more accurately reflect true skin colors based on a determined relationship between captured skin colors and actual skin colors as seen by a viewer.

A simplified block diagram of an image-rendering device according to an embodiment of the present invention is indicated generally at 30 in Fig. 2. The image-rendering device, in its depicted form, includes a processor 32, memory 34, and an input/output unit 44. A bus 36 may link processor 32, memory 34 and input/output unit 44.

Processor 32 may take the form of a central processing unit (CPU), or other suitable controller for controlling operation of the image-rendering device. Processor 32 thus may be configured to manage adjustment of colors in a captured image as described herein. For example, processor 32 may manage operation of a color-correction program 38 configured to identify selected captured colors within a captured image, to match such selected captured colors with true colors, and to produce a substitute image with the true colors in place of the selected captured colors. Color correction program 32 may be resident in memory 34 or on a mass storage device (not shown).

Memory 34 may include both volatile memory and non-volatile memory. Non-volatile memory may be utilized for such functions as storing color databases 40, 42 as described in more detail below. Non-volatile memory may further be utilized to store other permanent or semi-permanent data. Such non-volatile memory may be any suitable type of non-volatile memory, including, but not limited to, ROM, PROM, EPROM, EEPROM and Flash memory, and combinations thereof. Volatile memory may be utilized to temporarily store an electronic image. Volatile memory also may be used to store instructions regarding correction of colors in a captured image and/or generation of an output, such as a print output, with the corrected colors. Volatile memory may include one or more suitable types of volatile memory, such as SRAM or DRAM.

As described briefly above, image-rendering device, through processor 32 and memory 34, may be configured to run an application program, such as a color-correction program 38. Color-correction program 38 may be resident on memory 34 within the image-rendering device (or alternatively, color-correction program 38 may be resident on a mass storage device loadable on the image-rendering device). Color-correction program 38 may be a software or firmware program configured to identify an item in an electronic image based on identification in a captured image of a color within a selected color set. The color-correction program further may be configured to match identified colors with true colors, and to produce a substitute image with corrected color.

Also resident on memory 34, are one or more selected color databases 40, and one or more true color databases 42. For simplicity, only one selected color database 40 is shown. Similarly, only one true color databases 42 is shown.

Selected color database 40 may include a set of selected colors that correspond to colors that are typically captured during image-capture of an item in connection with which a correction is to be made. For example, the set of selected colors may be predefined to include the various flesh tones, as typically captured by an image-capture device. Presence of one or more of these colors in a captured image thus may indicate presence of an item such as skin in the captured image, and may prompt correction of the captured image to more accurately reflect a viewer's perception of the actual item. This correction may occur by adjustment of each selected color within the captured image to reflect a true color identified within true color database 42.

As with the selected color database 40, true color database 42 may include a predefined set of colors. However, the colors within true color database 42 reflect predictions of true colors corresponding to actual colors captured by an image-capture device. Thus, if the selected color database includes digital flesh tones, the true color database may include corresponding real-life flesh tones. Each selected color therefore is provided with a corollary true color, which may be used in place of the selected color in producing a substitute image with improved color effect. Typically, the selected color database is more extensive than the true color database (plural selected colors being mapped to each true color), but it will be understood that such a plural-to-one relationship is not necessary

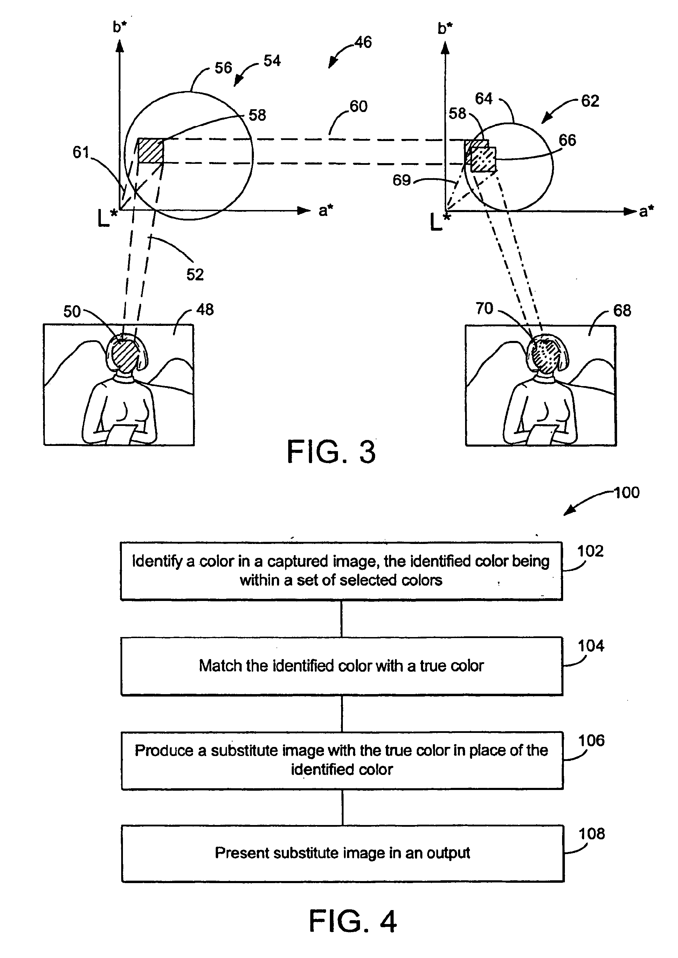

In some embodiments, the true color database may include a life-color plot of minimum and maximum chroma, and minimum and maximum hue, for real skin colors. Such life-color plot may be indexed by L*, as determined in the CIELAB space discussed below in relation to Fig. 3. Such a life-color plot may be created by measuring and recording the skin color of a wide variety of people. Each of the measurements may be extrapolated into highlight and shadow by weighing in the viewing illuminant and black, respectively, in the CIEXYZ color space. The plot may then be searched to find the minimum, maximum and median chroma, and hue for each L* value.

Fig. 3 further illustrates, at 46, the correction of colors in an electronic image using a flesh-tone selected color database and a corresponding flesh-tone true color database. Although illustrated in relation to flesh colors, it should be appreciated that the described method and databases may be adapted to correct a variety of other color sets, including grass color sets, sky color sets, water color sets, etc.

For purposes of illustration, an exemplary captured image is shown at 48 in Fig. 3. Captured image 48 includes a woman having a captured skin color 50. As described above, color-correction program 38 may be configured to identify a specific set of colors, such as commonly-occurring digital skin colors in the selected color database. Thus, the captured skin color 50 may be identified as within the selected color database.

A color plot of the selected color database is indicated generally at 54. For illustrative purposes, the selected color database is described in a CIELAB space, which is a reference color space that may be used to illustrate and/or quantify relative color difference. CIELAB space, or more properly, 1976 CIE L*a*b* space, is a color space with the coordinates L*, a*, and b*. The central vertical axis (L*), also referred to as the neutral axis, represents lightness, with values from 0 (black) to 100 (white). The two chrominance axes a*, b* each run from positive to negative. On the a* axis, positive values indicate amounts of red, while negative values indicate amounts of green. On the b* axis, yellow is positive, and blue is negative. For both the a* axis and the b* axis, zero is neutral. A single specific color can be uniquely identified with a value for each chrominance axis, and a luminance value of the central vertical axis. CIELAB space is but one example of many possible device-independent color space models that may be used to describe a color.

The range of colors in the selected color database (or set of selected colors) is schematically illustrated by circle 56 on the color plot of Fig. 3. Thus, captured skin color 50 may be identified (as indicated at 52) as a captured color 58 that falls within the range of selected colors forming the selected color database 54.

Captured color 58 may be matched (as indicated at 60) with a true color in a true color database, indicated generally at 62. The range of true colors in the true color database (or set of true colors) is indicated schematically by circle 64. These true colors (in the true color set) may correspond to measured real-life colors, e.g. measured skin colors. These true colors represent the colors actually perceived by a viewer of the actual item, e.g. skin.

It is noted that, in some embodiments, the true color database includes a smaller set of colors than the set of colors that compose the selected color database. Thus, as illustrated, a broad set of captured colors may be mapped into a smaller set of true colors in the true color database.

As shown, captured color 58 may be matched with a true color 66 by color-correction program 38 based on predetermined relationships between such captured color and the true colors within true color database 62. The relationship may be determined, for example, by experimentation. A substitute image 68 thus may be produced, the captured color having been adjusted to an adjusted color 70, which corresponds to true color 66. Thereafter, a corrected image may be printed or otherwise presented using substitute image 68.

It should be appreciated that chroma (saturation) and hue of the captured color may be compared and corrected to the chroma and hue of the true colors in the true color database, as indicated by 61 and 69, respectively. For example, if the captured color is more chromatic than the high-chroma extent of the true colors in the true color database, the chroma may be lowered toward the maximum-accepted chroma in the true color database. Similarly, if the hue is different from the median of the hue of the true colors in the true color database the hue of the captured color may be adjusted to a hue similar to the hue of the colors in the true color database. The amount of correction may be determined based on an interest in maintaining a realistic image of the captured objects. Such correction levels may be preset in the color-correction program. Alternatively, in some embodiments, the correction levels may be adjustable based on the properties of the captured image (level of overa**l** darkness, lightness or other properties), or by a viewer.

In some embodiments, the color-correction program may be used to identify captured colors that are outside, or partially outside, of the boundary of the true colors in the true color database. Such colors may be adjusted such that they fall within the boundary of the true color database.

Identifying, matching and correcting a captured color to produce an adjusted color which corresponds with a true color from a true color database may improve the perceived quality of a print output. Specifically, an identified color, such as captured skin color, may be adjusted to correlate with the perceived color of skin in real life. Moreover, such correction may be localized to colors within a selected color set such that the color-correction of an item having a color in the selected color set need not affect color of items outside of the selected color set. For example, correction of skin colors in an electronic image need not result in any change to the background colors in the image. Thus, the mountains illustrated in Fig. 3 are shown unaffected by the adjustment of the skin color.

Fig. 4 shows, generally at 100, a method of correcting color in a captured image. The method includes, at 102, identifying a color in the captured image as being within a set of selected colors. At 104, the method includes matching the identified color with a corresponding true color. At 106, the method includes producing a substitute image with the corresponding true color in place of the identified color. The method further may include, at 108, presenting the substitute image in an output, such as a print output.

While the present description has been provided with reference to the foregoing embodiments, those skilled in the art will understand that many variations may be made therein without departing from the spirit and scope defined in the following claims. The description should be understood to include all novel and non-obvious combinations of elements described herein, and claims may be presented in this or a later application to any novel and non-obvious combination of these elements. The foregoing embodiments are illustrative, and no single feature or element is essential to all possible combinations that may be claimed in this or a later application. Where the claims recite "a" or "a first" element or the equivalent thereof, such claims should be understood to include incorporation of one or more such elements, neither requiring, nor excluding, two or more such elements.

## Claims

1. A method (100) of correcting color in an image (48), the method (100) comprising: identifying (102) a color in the image (48) as being within a set of selected colors (56); matching (104) the identified color (58) with a corresponding true color (66); and producing (106) a substitute image (68) with the corresponding true color (66) in place of the identified color (58).

2. The method (100) of claim 1, wherein identifying (102) a color in the image (48) includes identifying a color that falls within a set of colors (56) corresponding to colors expected to represent a selected item as captured by an image-capture device (12).

3. The method (100) of claim 2, wherein matching (104) the identified color (58) includes adjusting the identified color (58) to fall within a set of true colors (64) corresponding to colors of the selected item as perceived by a viewer.

4. The method (100) of claim 3, wherein the set of true colors (64) is defined by true color ranges of chroma and hue, and wherein adjusting the identified color (58) includes shifting at least one of chroma and hue of the identified color to bring the identified color (58) within the true color ranges of chroma and hue.

5. The method (100) of claim 4, wherein shifting chroma of the identified color (58) includes, where chroma exceeds a high-chroma extent of the true color chroma range, shifting chroma toward a high-chroma extent of the true color chroma range.

6. A color correction system (10) comprising: memory (34) including a set of selected colors (40) corresponding to colors expected to represent a selected item as captured by an image-capture device (12); and a processor (32) to communicate with the memory (34), the processor (32) being configured to identify colors in the set of selected colors (40) and to adjust the identified colors to one or more true colors (42) which correspond with colors of the item as perceived by a viewer.

7. The color correction system of claim 6, wherein the one or more true colors (42) are measured skin colors.

8. A storage medium readable by a processor (32), having embedded therein a program of instructions executable by the processor (32) to: identify (102) a selected color (58) in an image, the selected color (58) being a color expected to represent a selected item as captured by an image-capture device (12); match (104) the selected color (58) with a measured true color (66) of the item; and adjust the selected color (58) to correspond with the measured true color (66).

9. The storage medium of claim 8, wherein the instructions executable to match the selected color (58) with a measured true color (66) include instructions executable to match chroma and hue of the selected color (58) with chroma and hue of a corresponding measured true color (66).

10. A color correction system (10) comprising: means for identifying (102) a selected color (58) in an image, the selected color (58) being a color expected to represent a selected item as captured by an image-capture device (12); means for matching (104) the selected color (58) with a measured true color (66) of the item; and means for adjusting the selected color (58) to correspond with the measured true color (66).
